Europäisches Patentamt

European Patent Office

Office européen des brevets

(19)

(11) Veröffentlichungsnummer: **0 270 803**
**B1**

(12) **EUROPÄISCHE PATENTSCHRIFT**

(45) Veröffentlichungstag der Patentschrift:
25.07.90

(51) Int. Cl.⁵: **B23K 3/02**

(21) Anmeldenummer: **87115724.4**

(22) Anmeldetag: **27.10.87**

(54) Lötspitze.

(30) Priorität: **08.12.86 DE 3641873**

(43) Veröffentlichungstag der Anmeldung:
**15.06.88 Patentblatt 88/24**

(45) Bekanntmachung des Hinweises auf die Patenterteilung:
**25.07.90 Patentblatt 90/30**

(84) Benannte Vertragsstaaten:
**AT BE CH DE FR GB IT LI LU NL**

(56) Entgegenhaltungen:
**EP-A- 0 068 484**
**CH-A- 629 693**
**DE-A- 2 164 822**
**DE-A- 2 260 722**

(73) Patentinhaber: **ERSA Ernst Sachs KG GmbH & Co.,
Leonhard-Karl-Strasse 24, D-6980 Wertheim / Main(DE)**

(72) Erfinder: **Gottschild, Wilfried, Dipl.-Ing. Dipl.-Wirt. Ing.,
Caspar-Merian-Strasse 19, D-6980 Wertheim(DE)**

(74) Vertreter: **Gudel, Diether, Dr. et al, Patentanwälte
Dipl.-Ing. G. Dannenberg Dr. P. Weinhold Dr. D. Gudel
Dipl.-Ing. S. Schubert Dr. P. Barz Grosse Eschenheimer
Strasse 39, D-6000 Frankfurt am Main 1(DE)**

ACTORUM AG

## Beschreibung

Die Erfindung betrifft eine Lötspitze aus Keramikmaterial.

Herkömmliche Lötspitzen bestehen aus Elektrolytkupfer oder anderen Metallen oder Metallkombinationen.

Damit ist aber verbunden, daß Metalle insbesondere im heißen Zustand stark verzundern und durch aufwendige Beschichtungsverfahren geschützt werden müssen und daß der Heizkörper des Lötkolbens elektrisch von der Lötspitze isoliert werden muß, beispielsweise durch Zwischenlage geeigneter Isoliermaterialien.

Die DE-A 2 260 722 beschreibt eine Stempel-Lötspitze aus BeO-Keramik. Dieses Material ist toxisch und gehört damit zu den gefährlichen Arbeitsstoffen.

Die Erfindung verbessert diesen Stand der Technik. Ihr liegt die Aufgabe zugrunde, eine Lötspitze vorzuschlagen, bei der die Verzunderung des Grundkörpers der Lötspitze vermieden wird und wo gesonderte elektrische Isolatoren überflüssig werden.

Zur Lösung dieser Aufgabe ist die Erfindung daduch gekennzeichnet, daß die Lötspitze aus AlN-Keramikmaterial besteht.

Dieses Material ist ein gut- bzw. hochwärmeleitfähiger, elektrischer Isolator und ein Material, welches sich gut formen läßt.

Man verbessert somit die Technik der bekannten, aus Metallen bestehenden Lötspitzen, die bekanntlich eine gute Wärmeleitfähigkeit mit einer guten elektrischen Leitfähigkeit verbinden.

Eine konstruktiv besonders einfache Ausgestaltung der Erfindung ist dadurch gekennzeichnet, daß die Lötspitze gleichzeitig der Träger des Heizkörpers des Lötkolbens ist.

Die Erfindung wird im folgenden anhand von Ausführungsbeispielen näher erläutert, aus denen sich weitere wichtige Merkmale ergeben. Es zeigt:

Fig. 1 - eine Ansicht einer ersten Ausführungsform einer erfindungsgemäßen Lötspitze mit Außenbeheizung;

Fig. 2 - einen schematischen Längsschnitt durch die wesentlichen Bauteile einer erfindungsgemäßen Lötspitze mit Innenbeheizung.

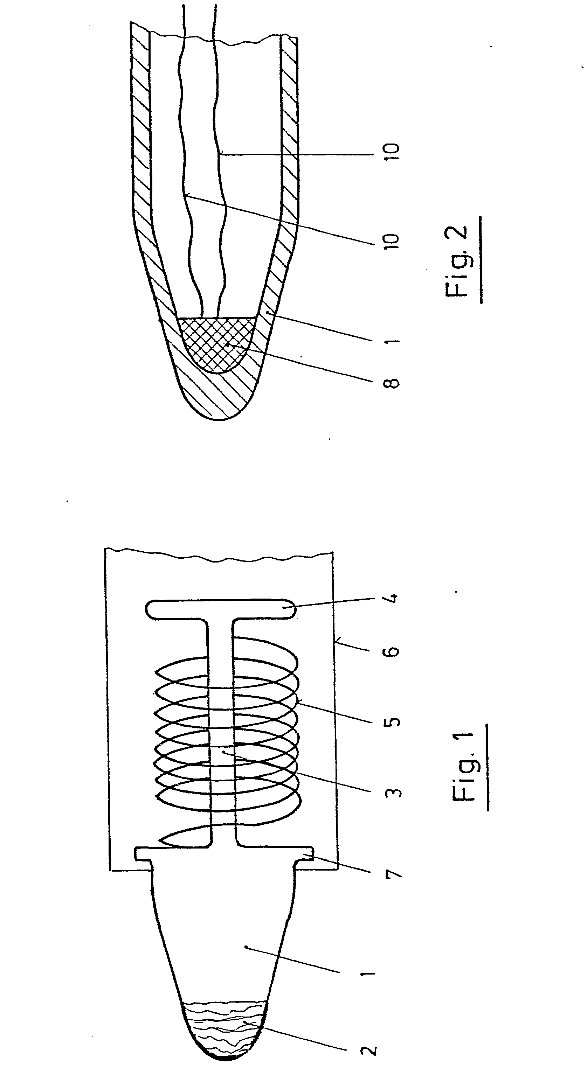

In Fig.1 ist eine Lötspitze 1 gezeigt, die aus AlN besteht. Der vordere Teil der Lötspitze kann mit einem Überzug 2 aus Metall oder einer Metallschichtfolge versehen sein, dessen letzte Schicht von Zinn oder Zinn-Blei o.ä. benetzt werden kann.

Die kegelförmige, eigentliche Lötspitze 1 ist zur rückwärtigen Seite hin zu einem stilförmigen Fortsatz 3 verlängert, der in einem sich in Querrichtung erstreckenden Flansch 4 endet. Auch diese Teile bestehen aus AlN und sind einstückig mit der eigentlichen Lötpsitze 1. Eine Heizspule 5 ist auf den Fortsatz 3 aufgewickelt, wodurch eine Außenbeheizung hergestellt wird. Über die Spule ist ein Schutzrohr 6 geschoben, deren vorderes Ende über Flansche 7 der Lötspitze 1 geschnappt ist und dadurch dort festgelegt wird. Auch die Flansche sind einstückig mit der Lötspitze 1 an diese angeformt.

Die Ausführungsform nach Fig.2 zeigt schematisch eine Lötspitze mit Innenbeheizung. Auch diese Lötspitze besteht aus AlN. Sie ist hohlzylindrisch ausgebildet und ein Heizkörper 8 ist in den Innenraum des Hohlzylinders eingesetzt und steht in gut wärmeleitendem, möglichst großflächigem Kontakt mit der Innenwand der Lötspitze 1, und zwar möglichst am vorderen Ende des Hohlraums.

Der Heizkörper 9 ist über Anschlußleiter 10 an eine herkömmliche Spannungsquelle angeschlossen.

Auch bei dieser Ausführungsform kann das vordere Ende der Lötspitze mit einem Überzug aus Zinn versehen sein.

## Patentansprüche

1. Lötspitze aus Keramikmaterial,
**dadurch gekennzeichnet,**
daß sie aus AlN-Keramikmaterial besteht.

2. Lötspitze nach Anspruch 1 oder 2,
**dadurch gekennzeichnet,**
daß die Lötspitze gleichzeitig der Träger des Heizkörpers (5,8) des Lötkolbens ist.

3. Lötspitze nach einem der Ansprüche 1 bis 3,
**dadurch gekennzeichnet,**
daß die Lötspitze mit einem Überzug (2) aus Metall oder einer Metallschichtfolge versehen ist.

## Claims

1. Soldering tip made of ceramic material, characterized in that same is constisting of AlN ceramic material.

2. Soldering tip according to claim 1, characterized in that the soldering tip is simultaneously carrying the heating body (5, 8) of the soldering iron.

3. Soldering tip according to claims 1 or 2, characterized in that the soldering tip is provided with a coating (2) of metal or a metal layer series.

## Revendications

1. Panne de fer à souder en matériau céramique, caractérisée en ce qu'elle est réalisée en un matériau céramique AlN.

2. Panne de fer à souder selon la revendication 1, caractérisée en ce que la panne constitue simultanément le support du corps de chauffe (5, 8) du fer à souder.

3. Panne de fer à souder selon la revendication 1 ou 2, caractérisée en ce que la panne de fer à souder est pourvue d'un revêtement (2) composé d'un métal ou d'une succession de couches métalliques.

Fig. 1

Fig. 2